# EUROPEAN PATENT SPECIFICATION

(11) **EP 0 391 944 B1**
(45) Date of publication and mention of the grant of the patent: **27.04.1994**
(21) Application number: 89900121.8
(22) Date of filing: 22.11.1988
(51) Int. Cl.: G01K 1/16, G01K 7/00

(54) **A METHOD OF MEASURING THE TEMPERATURE OF A GAS IN A SPACE BY MEANS OF A PYROMETER, AND A PYROMETER**
VERFAHREN ZUM MESSEN DER GASTEMPERATUR IN EINEM RAUM UNTER VERWENDUNG EINES PYROMETERS UND PYROMETER
PROCEDE SERVANT A MESURER LA TEMPERATURE D'UN GAZ DANS UN ESPACE AU MOYEN D'UN PYROMETRE ET PYROMETRE UTILISE

(30) Priority: 23.11.1987 DK 6147/87
(43) Date of publication of application: 17.10.1990
(73) Proprietor: FORSKNINGSCENTER RISO, 4000 Roskilde (DK)
(72) Inventor: ANDERSEN, Finn, DK-2610 Rödovre (DK)
(74) Representative: Nielsen, Henrik Sten
(86) International application number: DK8800190
(87) International publication number: WO8904951

(56) References cited:
- DE-A- 1 773 697
- DE-A- 2 507 760
- GB-A- 2 128 754
- GB-A- 2 175 693
- US-A- 2 764 023
- US-A- 2 814 952
- US-A- 3 075 387
- US-A- 3 167 960
- US-A- 3 368 406
- US-A- 3 940 988

## Description

The present invention relates to a method of measuring the temperature of a gas in a space, such as the temperature of the order of 900-1200°C of a combustion gas in a combustion chamber, by means of a pyrometer having a thermal sensor for generating a gas temperature dependent, electrical signal and having a radiation screen in which a gas inlet and a gas outlet are provided, and which substantially encases the thermal sensor arranged inside the radiation screen.

In a typical application of the above method, the temperature of a gas is measured in a combustion chamber, which temperature may be in the order of 700-1200°C. The combustion chamber may for example be a chamber in an incinerator in which for example refuse, especially household refuse, is burned. Alternatively, the combustion chamber may be a combustion chamber of a power station or a heating station, in which combustion chamber fossil fuel is burned, especially coal, oil, gas or another combustible material, for example straw, etc., or a corresponding combustion chamber in a factory or the like. The measurement of the temperature of the combustion gas firstly serves the purpose of monitoring that, on one hand, a complete combustion takes place, and on the other hand, a combustion which does not take place at such a temperature, especially such a low temperature, that toxic combustion products are formed, especially dioxin. For measuring the temperature of the combustion gas which, as already mentioned, may have a temperature of above 1000°C, a pyrometer is used in accordance with this method, which pyrometer has a thermal sensor which may be constituted by a thermocouple or a resistive element the resistance of which changes as a function of the temperature in a known manner. In order to ensure that the temperature registered by the thermal sensor is the gas temperature and not a random temperature determined by hot and/or cold bodies or zones, particularly radiation sources detected by the thermal sensor, the thermal sensor in such a known pyrometer used for measuring the temperature of a gas, particularly a combustion gas, is encased in the radiation screen or radiation screens which serves or serve to ensure that the temperature registered by the thermal sensor is determined by the gas with which the thermal sensor is in contact or is brought into contact.

In accordance with the known art a pyrometer for carrying out the above, known method is usually formed as a suction pyrometer, i.e. a pyrometer whose gas inlet is placed inside the space in which the gas whose temperature is to be measured, is present, while the gas outlet of the pyrometer is arranged outside the space. Suction pyrometers of this type are commercially available from the British company LAND (See e.g. Product Sheet 116/0684). Through the pyrometer a strong gas flow is produced from the gas inlet to the gas outlet and thus past the thermal sensor and consequently expelled from the space by means of an ejector pump, an electric fan or the like. Apart from polluting the environment, these known pyrometers work with extremely high gas velocities, typically in the order of 150 m/s, in order to obtain a correct registration of the gas temperature. Consequently fairly large amounts of gas are sucked out from the space, which in itself may be unfortunate and further result in pollution.

The suction of gas from the space through the suction pyrometer takes place, as will be understood, via a channel from the gas inlet to the gas outlet of the pyrometer, which channel is connected to the ejector or fan. By the suction of gas with a temperature typically in the order of 700-1200°C through the channel, a cooling off of the gas in the channel takes place. Consequently, considerable amounts of fly ash or cinders are most often deposited in the channel. In measuring the temperature in incinerators in which the pyrometer has been introduced through an opening in the wall of the incinerator, especially in the top wall of the incinerator, the known suction pyrometers can only be used for measurement for fairly short time periods of a few hours, typically a maximum of 5-10 hours, after which time period the suction from the throughflow or suction pyrometer through the said channel is stopped or blocked by fly ash or cinders, whereupon the measuring procedure has to be interrupted.

The generation of a flow of gas past a temperature sensor in a thermometer for use at room temperature is disclosed in DE-A1-2 507 760. Another temperature sensor, which is suited for measuring the temperature of air supplied to a gas turbine engine of an aircraft is disclosed in US-A-3 167 960. US-A-3 940 988 discloses a sensor for measuring the temperature of a flowing stream of hot gas in a closed pipe.

An object of the present invention is to provide a method for pyrometric measurement of the temperature of a gas in a space, by which method a continuous monitoring of the gas temperature may be carried out, i.e. measurement of the gas temperature for up to 1000 hours or more. A further object of the present invention is to eliminate the sometimes unfortunate effects of polluting the environment by the suction of gas from the space in which the gas is present, the temperature of which is to be measured.

These and other objects are obtained in accordance with the present invention by a method as claimed by claim 1.

The basis of the invention is the realization that it is rendered possible to measure the temperature of the gas in the space continuously by arranging the pyrometer in the manner characteristic of the invention, i.e. by arranging the gas inlet and the gas outlet inside the space and by generating a gas flow through the pyrometer, i.e. from the gas inlet, past the thermal sensor arranged inside the radiation screen and to the gas outlet, as no substantial cooling takes place of the gas or the particles present in the gas and, consequently, that there is no stopping or blocking of the pyrometer or of a suction conduit or channel associated with the pyrometer, such as is the case with the known suction pyrometers. The gas flow through the radiation screen of the pyrometer, particularly past the thermal sensor arranged inside the radiation screen, which is mandatory for a correct measurement of the temperature of the gas, is generated in accordance with the invention by generating a relative low pressure at the gas outlet of the pyrometer. The low pressure is generated by the discharge of a pressure fluid supplied to the space via a pressure fluid conduit, from a nozzle or pressure fluid discharge opening of the pressure fluid conduit and consequently by an ejector effect.

It is to be noted that the relative low pressure may be generated just outside the radiation screen, alternatively and preferably inside the radiation screen, as the pressure fluid may be discharged from the nozzle or pressure fluid discharge opening which may be arranged outside the radiation screen or preferably inside or at the radiation screen as long as it is ensured that the low pressure generated at the gas outlet is sufficient for the generation of a gas flow through the inside of the radiation screen.

The pressure fluid may be any pressure fluid which is compatible with the measuring procedure in question, but will normally be pressurized air, pressurized water or pressurized steam. For certain applications, it may be advantageous to use a gas, such as nitrogen, which is inert to a process or combustion. Alternatively, the gas may be used whose temperature is to be measured and which is sucked out from the space, cooled off, compressed in a compressor unit and fed back into the space via the pressure fluid conduit.

In accordance with the invention it has surprisingly been found that in order to generate a gas flow through the inside of the radiation screen for obtaining a correct gas temperature measurement it is sufficient to supply the pressure fluid in fairly small amounts. Thus, it has been found that by using pressurized air in carrying out the method according to the invention a sufficient gas flow may be generated through the radiation screen of the pyrometer by supplying pressurized air and discharging the pressurized air from the nozzle or the pressure fluid discharge opening in an amount of 15-100 l/min., or preferably 15-50 l/min.

It has further surprisingly been found that a correct temperature measurement may be obtained at flow velocities through the pyrometer which are considerably smaller than the flow velocities which have so far been considered necessary in accordance with the above known art for obtaining correct temperature measurements. Thus it has been found that said relative low pressure at the gas outlet may be generated with a gas flow through the radiation screen of the pyrometer having a flow velocity in the order of 30-50 m/s. As a result of this low flow velocity the risk of blocking or stoppage is further reduced as lower amounts of gas are passed through the pyrometer than in the known art.

The present invention also relates to a pyrometer according to claim 6.

In the pyrometer according to the invention, the nozzle or pressure fluid discharge opening may be arranged in any manner in relation to the radiation screen of the pyrometer as long as it is ensured that a gas flow is generated through the inside of the radiation screen from the gas inlet, but it is preferred that the nozzle or pressure fluid discharge opening is arranged inside the radiation screen and downstream relative to the thermal sensor referring to the direction of the gas transportation from the gas inlet to the outlet.

The pyrometer may be embodied in numerous ways determined by the measuring location, particularly the space in which the pyrometer is to be arranged during measurement, by the environment, particularly the gas to which the pyrometer is exposed, and further by the requirements to the durability of the pyrometer, particularly its ability to stand a high temperature for a long period of time, and further reactive gasses if any. Even though the radiation screen may be formed in any appropriate manner and have any appropriate shape, for example be formed as a ball, a cube or be constituted by any other geometrical shape, the radiation screen is, in accordance with the presently preferred embodiment of the pyrometer according to the invention, preferably embodied comprising a cylindrical pipe of a high temperature resistant material, which cylindrical pipe is open at one end, which open end constitutes the gas outlet, one or more peripheral openings constituting the gas inlet being provided in the cylindrical pipe, and the thermal sensor and the pressure fluid discharging nozzle or pressure fluid discharge opening of the pressure fluid conduit being arranged consecutively between said peripheral opening or openings and said open end.

In accordance with another embodiment of the invention the radiation screen has two circularly cylindrical pipes arranged coaxially inside each other, and in the space between these coaxially arranged circularly cylindrical pipes either an insulating material may be provided or a space be formed which forms a cooling jacket which is supplied with a cooling medium, particularly cooling water, and which encases and protects the thermal sensor of the pyrometer against a too strong, sudden thermal influence from a possible, strongly radiating heat source present in the space. In this embodiment comprising a cooling jacket, the circularly cylindrical pipes may be made from different materials. Thus, the outer cylindrical pipe may be made from a material which can withstand particularly strong radiation action, while the inner cylindrical pipe merely has to withstand the thermal action from the gas whose temperature is to be measured. The radiation screen is advantageously made from heat resistant stainless steel, such as A.I.S.I. (American Iron and Steel Institute) 310 steel or 25/20 Ni/Cr steel possibly containing a small amount of Si, quartz glass or a high temperature resistant ceramic material, such as aluminium and beryllium oxide.

The thermal sensor of the pyrometer may, like in the conventional pyrometers, be constituted by a thermocouple or a resistive temperature measuring element, i.e. a resistor element, the temperature variation of the resistance value of which is detected for determining the temperature of the element. Naturally, other thermal sensors, such as high temperature resistant semiconductor elements, etc., can also be used for special applications.

In accordance with the invention the pyrometer preferably has further means for fastening the pyrometer in an opening in a wall delimiting the space. Thus, in the preferred embodiment of the pyrometer according to the invention the pyrometer preferably has a flange projecting from the radiation screen of the pyrometer.

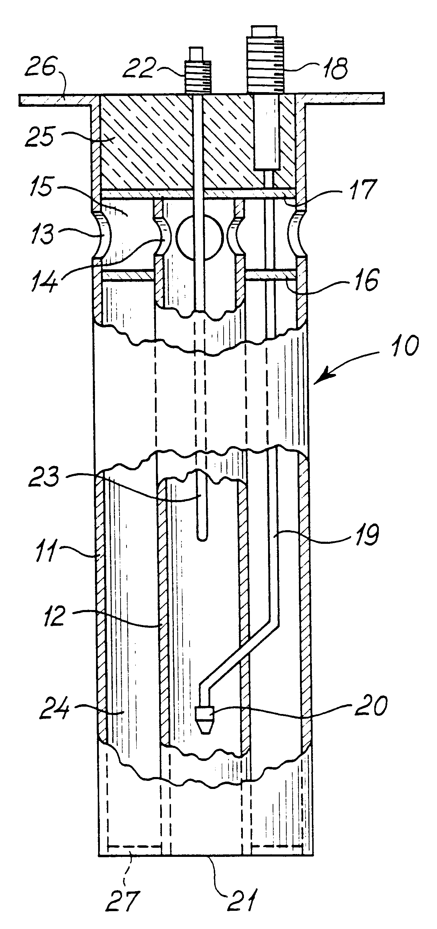

The invention will now be explained with reference to the drawing which is a schematic and partially sectional view of a presently preferred embodiment of a pyrometer according to the invention for carrying out the method according to the invention.

The pyrometer according to the invention shown in the drawing is generally designated 10 and comprises two circularly cylindrical pipes 11 and 12 arranged coaxially inside each other and made of a high temperature resistant material, such as heat resistant stainless steel, for example A.I.S.I. (American Iron and Steel Institute) 310 steel, quartz glass or a high temperature resistant ceramic material. It is to be noted that the two circularly cylindrical pipes 11 and 12 need not be of the same material. Thus, the outer pipe 11 may advantageously be of a material which can withstand higher temperatures than the material of the inner circularly cylindrical pipe 12, particularly higher temperatures produced by heat radiation sources. In the two circularly cylindrical pipes 11 and 12 adjacent to the upper ends of the pipes 11 and 12, several peripheral openings 13 and 14, respectively, are provided which are arranged coaxially in alignment and establish a connection from the environment of the pyrometer 10 to an inner space defined by the inner, circularly cylindrical pipe 12. The connection from the environment of the pyrometer 10 to the inner space of the pipe 12 constitutes a channel which is designated 15 in the drawing, and which is further defined by two circular plate-shaped parts 16 and 17, of which the plate-shaped part 16 has an inner circular opening and is arranged so as to seal the space between the outer and the inner cylindrical pipes 11 and 12, respectively, i.e. the part 16 is arranged in a sealing relationship with the inner wall of the pipe 11 and in a sealing relationship with the outer wall of the pipe 12, while the other circular plate-shaped part 17 is arranged in a sealing relationship with the inner wall of the pipe 11 and sealingly abutting the upper end of the pipe 12.

In the inner space defined by the inner, circularly cylindrical pipe 12 a thermocouple 23 is arranged extending from a threaded junction bushing 22 at the upper end of the pyrometer 10 through a central opening in the circular plate-shaped part 17 into the inner space of the pipe 12.

Apart from the circular plate-shaped parts 16 and 17 the pyrometer 10 has a circular plate-shaped part 27 at its lower end. The circular plate-shaped part 27 has a central opening and is arranged in a sealing relationship with the outer wall of the pipe 12 and the inner wall of the pipe 11, so that a space 24 is defined between the pipes 11 and 12 and between the plate-shaped parts 16 and 17 in which space 24 a thermally insulating material, such as KERLANE® 60 may be enclosed. Instead of a thermal insulation an inlet and an outlet channel for the supply and discharge, respectively, of a cooling medium, such as cooling water, may be provided in the space 24. The plate-shaped parts 16, 17 and 27 may he of the same material as the pipes 11 and 12 or of another, preferably thermally insulating material, such as a ceramic material.

As is evident from the drawing, the pyrometer 10 has an open lower end 21, as the plate-shaped part 27 does not close the lower end of the inner circularly cylindrical pipe 12. There is, thus, connection from the environment of the pyrometer through the openings 13, the channel 15, the openings 14 and the inside of the pipe 12 and further through the opening 21 to the environment. In accordance with the invention a forced gas flow is generated from the environment of the pyrometer through the openings 13, the channel 15 and the openings 14 and further down past the thermocouple 23 and through the opening 21 by the generation of a relative low pressure at the lower end of the pyrometer. According to the invention, this low pressure is generated by discharging a pressure fluid, preferably pressurized air, from a pressurized air nozzle 20 which may be arranged outside the pyrometer or, as shown in the drawing, inside the pyrometer or rather inside the pipe 12. The drawing shows a threaded connection bushing 18 for mounting a pressurized air conduit (not shown in the drawing), which piece is connected to a pressurized air conduit or pipe 19 which ends in the pressurized air discharge nozzle 20. By discharging pressurized air from the nozzle 20 a relative low pressure is generated in accordance with generally known physical laws just below the nozzle 20, at which place the gas flow velocity is high owing to the discharge of pressurized air.

It is to be noted that the two pipes 11 and 12 together with the associated plate-shaped parts 16, 17 and 27 constitute a radiation screen having an upper flange 26 firmly connected to the pipe 11 and serving the purpose of maintaining the pyrometer 10 in a vertical or upright position as shown in the drawing when the pyrometer 10 is suspended in an inner space in an incinerator, introduced through an opening in the upper wall of the incinerator. As will be evident to persons having skill in the art, the pipes 11 and 12 and further the plate-shaped parts 16, 17 and 27 of the radiation screen may advantageously have radiation reflecting and radiation absorbent surfaces which may be provided in accordance with technical radiation principles known *per se* for optimization of the performance of the radiation screen. Although the drawing shows several openings 13 and 14 in the pipe 11 and the pipe 12, respectively, it is preferred, especially for use of the pyrometer 10 for measurement of the gas temperature in incinerators in which there is a circulation of gas containing particles of soot, cinders and fly ash, that peripheral openings 13 and 14 are only provided in the pipes 11 and 12, respectively, on one side of the pyrometer, which side is arranged in the lee side in relation to the circulation of the waste gas so as to prevent an introduction of particles of soot, cinders or fly ash by the waste gas circulation through the peripheral openings otherwise resulting in stoppage and blockage of the pyrometer.

In the drawing a space defined above the circular plate-shaped part 17 within the pipe 11 is further filled with a deposit or casting 25 which is preferably a thermally insulating, high temperature resistant deposit or casting, such as a high temperature resistant epoxy deposit or casting. In an alternative embodiment the deposit or casting 25 is omitted, and the space is consequently empty.

It is especially to be noted that the pyrometer according to the invention and shown in the drawing is adapted to be arranged in a space in which a gas is present, the temperature of which is to be measured, having its gas inlets 13 and 14 and its gas outlet 21 arranged in the space in question so that in accordance with the principles of the invention a gas flow is generated past the thermocouple 23 in the space, without extraction or suction of gas from the space, as is the case with the known suction pyrometers. Thus, any problems are avoided in connection with stoppage of the suction channel of the suction pyrometer, unintentional pollution in consequence of suction of toxic suction gases from the space, etc. Whereas, most frequently, it has only been possible to use the known suction pyrometers for 5-10 hours owing to stoppage or blockage of the suction channel, the pyrometer 10 according to the invention shown in the drawing and implemented in accordance with the below example has been used continuously for measuring the temperature in a combustion chamber in an incinerator for burning household refuse for a period of more than 1000 hours.

### EXAMPLE

A pyrometer 10 according to the invention was constructed from the following components:
the inner pipe 12 was a pipe of heat resistant stainless steel, A.I.S.I. 310 steel or so-called 25/20 Ni/Cr steel and had a length of 500 mm, an inner diameter of 14 mm and a wall thickness of 1 mm,
the outer pipe 11 was also of heat resistant stainless steel, A.I.S.I. 310 steel and had a total length of 3000 mm, an outer diameter of 40 mm and a wall thickness of 1.5 mm,
the plate-shaped components 16, 17 and 27 were also made from heat resistant stainless steel, A.I.S.I. 310 steel of a plate thickness of 1.0 or 1.5 mm,
the space 24 was filled with thermally insulating material of the type KERLANE® 60,
the thermal sensor 23 was a thermocouple of a commercially available type, e.g. a type K, NiCr/Ni thermal sensor of a diametre of 3 mm and having a jacket of 5/10 steel,
the holes or openings 13 and 14 had a diameter of 10 mm,
the pressurized air conduit 19 was a stainless steel pipe of A.I.S.I 310 steel of an outer diameter of 4 mm and a wall thickness of 0.5 mm, and
the nozzle 20 had an inner bore of a diameter of 1 mm.

For a period of more than 1000 hours (corresponding to continuous measuring for 2 months) temperatures were measured continuously in an incinerator within the range of 900-1200°C, a gas flow of a velocity of 30-60 m/s being generated by supply of pressurized air in an amount of 15-50 l/min. in the radiation screen of the pyrometer, or rather in the inner space defined by the pipe 12.

Although the invention has been described above with reference to a special embodiment of a pyrometer according to the invention, it is obvious that numerous modifications and amendments may be made within the scope of the invention as claimed by the claims. The materials stated in the example thus merely serve to illustrate the invention, as these material statements must not be considered limiting. It is thus expected that instead of the heat resistant stainless steel type stated, A.I.S.I. 310 steel, stainless steel with a higher oxide scale may be used, particularly another type of 25/20 Ni/Cr steel with a small content of Si to obtain an increased oxide scale temperature compared with traditional 25/20 Ni/Cr steel. Instead, it is possible that especially quartz glass or ceramic materials, such as aluminium or beryllium oxide, are usable for the components in the radiation screen of the pyrometer and probably also for the components of the pressure fluid conduit and the pressure fluid discharge nozzle. It should further be noted that the radiation screen may possibly be formed with a neck and a subsequent enlargement for the generation of a venturi effect, just as instead of pressurized air, it is probably possible to use pressurized water or pressurized steam, possibly a gas, such as nitrogen or the like, which is inert in relation to the gas whose temperature is to be measured, or possibly a gas sucked out from the measuring chamber and compressed in a compressor unit after cooling.

## Claims

1. A method of measuring temperatures of the order of 700-1200°C of a combustion gas in a combustion chamber by means of a pyrometer (10) having a thermal sensor (23) for generating a gas temperature dependent, electrical signal and a radiation screen (11, 12, 16, 17, 27) through which a forced flow of the combustion gas is generated, passing from a gas inlet (13, 14), which is defined in the radiation screen and and which is arranged inside the combustion chamber, past the thermal sensor (23) which is arranged inside the radiation screen (11, 12, 16, 17, 27),
**characterized** in that the pyrometer (10) is arranged with its gas outlet (21) inside the combustion chamber, that a pressure fluid is passed from a pressure fluid source arranged outside the combustion chamber through a pressure fluid conduit (19) to a nozzle (20) or pressure fluid discharge opening of the pressure fluid conduit arranged inside the combustion chamber, from which nozzle or pressure fluid discharge opening the pressure fluid is discharged, and that a low pressure is generated at the gas outlet (21) by the discharge of pressure fluid from the nozzle (20) or pressure fluid discharge opening for generating the forced gas flow through the inside of the radiation screen (11, 12, 16, 17, 27) from the gas inlet (13, 14), past the thermal sensor (23) arranged inside the radiation screen (11, 12, 16, 17, 27) and to the gas outlet (21).

2. A method according to claim 1,
**characterized** in that said low pressure is generated inside the radiation screen (11, 12, 16, 17, 27) by discharging pressure fluid from the nozzle (20) or the pressure fluid discharge opening which is arranged inside the radiation screen (11, 12, 16, 17, 27).

3. A method according to claim 1 or 2,
**characterized** in that the pressure fluid is pressurized air, pressurized water or pressurized steam.

4. A method according to claim 2,
**characterized** in that the pressure fluid, which is preferably pressurized air, is discharged from the nozzle or pressure fluid discharge opening in an amount of 15-100 l/min., preferably 15-50 l/min.

5. A method according to any of the preceding claims,
**characterized** in that by the generation of said relative low pressure at the gas outlet (21) a gas flow is generated having a flow velocity in the order of 30-50 m/s.

6. A pyrometer (10) for use in the method according to claim 1 and having a thermal sensor (23) for generating a gas temperature dependent, electrical signal and a radiation screen (11, 12, 16, 17, 27) in which gas inlet (13, 14) is defined and is adapted to be arranged in a combustion chamber, the thermal sensor (23) being arranged inside the radiation screen (11, 12, 16, 17, 27),
**characterized** in that the pyrometer (10) is adapted to be arranged with its gas outlet (21) inside the combustion chamber, that the pyrometer (10) has a pressure fluid conduit (19) which is adapted to be supplied with a pressure fluid from an outer pressure fluid source, and which ends in a nozzle (20) or a pressure fluid discharge opening for discharging the pressure fluid and for generating a gas flow through the inside of the radiation screen (11, 12, 16, 17, 27) from the gas inlet (13, 14), past the thermal sensor (23) arranged inside the radiation screen (11, 12, 16, 17, 27) and to the gas outlet (21) by generating a relative low pressure at the gas outlet (21) by the pressure fluid discharge.

7. A pyrometer according to claim 6,
**characterized** in that the nozzle (20) or pressure fluid discharge opening is arranged inside the radiation screen (11, 12, 16, 17, 27) and downstream relative to the thermal sensor (23) referring to the direction of the gas transportation from the gas inlet (13, 14) to the gas outlet (21).

8. A pyrometer according to claim 7,
**characterized** in that the radiation screen (11, 12, 16, 17, 27) comprises a cylindrical pipe (12) of a high temperature resistant material, that the cylindrical pipe (12) is open (21) at one end, which open end constitutes the gas outlet (21), that the gas inlet (13, 14) is constituted by one or more peripheral openings (14) in the cylindrical pipe (12), and that the thermal sensor (23) and said nozzle (20) or pressure fluid discharge opening are arranged consecutively between said peripheral opening or openings (14) and said open end (21).

9. A pyrometer according to claim 8,
**characterized** in that the radiation screen (11, 12, 16, 17, 27) comprises two circularly cylindrical pipes (11, 12) arranged coaxially inside each other.

10. A pyrometer according to any of the claims 6-9,
**characterized** in that the radiation screen (11, 12, 16, 17, 27) is made from heat resistant stainless steel, such as A.I.S.I. (American Iron and Steel Institute) 310 steel or 25/20 Ni/Cr steel, possibly containing a small amount of Si, quartz glass or a high temperature resistant ceramic material, such as aluminium or beryllium oxide.

11. A pyrometer according to any of the claims 6-10,
**characterized** in that the thermal sensor (23) is a thermocouple or a resistive temperature measuring element.

## Patentansprüche

1. Ein Verfahren des Messens von Temperaturen in der Größenordnung von 700-1200°C eines Verbrennungsgases in einer Verbrennungskammer mittels eines Pyrometers (10), das einen thermischen Sensor (23) zum Erzeugen eines gastemperaturabhängigen elektrischen Signals hat und eine Strahlungsabschirmung (11, 12, 16, 17, 27), durch welche eine forcierte Strömung des Verbrennungsgases erzeugt wird, das von einem Gaseinlaß (13, 14), welcher in der Strahlungsabschirmung begrenzt ist und welcher innerhalb der Verbrennungkammer angeordnet ist, an dem thermischen Sensor (23) vorbei, welcher innerhalb der Strahlungsabschirmung (11, 12, 16, 17, 27) angeordnet ist, strömt,
dadurch **gekennzeichnet,** daß das Pyrometer (10) mit seinem Gasauslaß (21) innerhalb der Verbrennungskammer angeordnet ist, daß ein Druckfluid von einer außerhalb der Verbrennungskammer angeordneten Druckfluidquelle durch eine Druckfluidleitung (19) zu einer Düse (20) oder Druckfluidentladungsöffnung der Druckfluidleitung, die innerhalb der Verbrennungskammer angeordnet ist, hindurchgeleitet wird, von welcher Düse oder Druckfluidentladungsöffnung das Druckfluid entladen wird, und daß ein niedriger Druck an dem Gasauslaß (21) durch die Entladung des Druckfluids aus der Düse (20) oder Druckfluidentladungsöffnung zum Erzeugen der forcierten Gasströmung durch das Innere der Strahlungsabschirmung (11, 12, 16, 17, 27) von dem Gaseinlaß (13, 14), vorbei an dem innerhalb der Strahlungsabschirmung (11, 12, 16, 17, 27) angeordneten thermischen Sensor (23) und zu dem Gasauslaß (21) erzeugt wird.

2. Ein Verfahren gemäß Anspruch 1, dadurch **gekennzeichnet,** daß der niedrige Druck innerhalb der Strahlungsabschirmung (11, 12, 16, 17, 27) durch Entladen von Druckfluid aus der Düse (20) oder der Druckfluidentladungsöffnung, welche innerhalb der Strahlungsabschirmung (11, 12, 16, 17, 27) angeordnet ist, erzeugt wird.

3. Ein Verfahren gemäß Anspruch 1 oder 2, dadurch **gekennzeichnet,** daß das Druckfluid Druckluft, Druckwasser oder Druckdampf ist.

4. Ein Verfahren gemäß Anspruch 2, dadurch **gekennzeichnet,** daß das Druckfluid, welches vorzugsweise Druckluft ist, aus der Düse oder Druckfluidentladungsöffnung in einer Menge von 15-100 l/min, vorzugsweise 15-50 l/min, entladen wird.

5. Ein Verfahren gemäß irgendeinem der vorhergehenden Ansprüche, dadurch **gekennzeichnet,** daß durch die Erzeugung des relativ niedrigen Drucks an dem Gasauslaß (21) eine Gasströmung erzeugt wird, die eine Strömungsgeschwindigkeit in der Größenordnung von 30-50 m/s hat.

6. Ein Pyrometer (10) für die Verwendung in dem Verfahren gemäß Anspruch 1, und das einen thermischen Sensor (23) zum Erzeugen eines gastemperaturabhängigen elektrischen Signals hat und eine Strahlungsabschirmung (11, 12, 16, 17, 27), in welcher ein Gaseinlaß (13, 14) abgegrenzt ist und geeignet ist, in einer Verbrennungskammer angeordnet zu sein, wobei der thermische Sensor (23) innerhalb der Strahlungsabschirmung (11, 12, 16, 17, 27) angeordnet ist, dadurch **gekennzeichnet,** daß das Pyrometer (10) dazu geeignet ist, mit seinem Gasauslaß (21) innerhalb der Verbrennungskammer angeordnet zu sein, daß das Pyrometer (10) eine Druckfluidleitung (19) hat, welche dazu geeignet ist, in einem Druckfluid von einer äußeren Druckfluidquelle her versorgt zu werden, und welche in einer Düse (20) oder einer Druckfluidentladungsöffnung endet zum Entladen des Druckfluids und zum Erzeugen einer Gasströmung durch das Innere der Strahlungsabschirmung (11, 12, 16, 17, 27) von dem Gaseinlaß (13, 14), vorbei an dem thermischen Sensor (23), der innerhalb der Strahlungsabschirmung (11, 12, 16, 17, 27) angeordnet ist, und zu dem Gasauslaß (21) durch Erzeugen eines relativ niedrigen Drucks an dem Gasauslaß (21) durch die Druckfluidentladung.

7. Ein Pyrometer gemäß Anspruch 6, dadurch **gekennzeichnet,** daß die Düse (20) oder Druckfluidentladungsöffnung innerhalb der Strahlungsabschirmung (11, 12, 16, 17, 27) und stromabwärts relativ zu dem thermischen Sensor (23), bezugnehmend auf die Richtung des Gastransports von dem Gaseinlaß (13, 14) zu dem Gasauslaß (21), angeordnet ist.

8. Ein Pyrometer gemäß Anspruch 7, dadurch **gekennzeichnet,** daß die Strahlungsabschirmung (11, 12, 16, 17, 27) ein zylindrisches Rohr (12) aus einem hochtemperaturbeständigen Material umfaßt, daß das zylindrische Rohr (12) an einem Ende offen (21) ist, welches offene Ende den Gasauslaß (21) bildet, daß der Gaseinlaß (13, 14) von einer oder mehreren Umfangsöffnungen (14) in dem zylindrischen Rohr (12) gebildet ist, und daß der thermische Sensor (23) und die Düse (20) oder Druckfluidentladungsöffnung hintereinander zwischen der Umfangsöffnung oder den Umfangsöffnungen (14) und dem offenen Ende (21) angeordnet sind.

9. Ein Pyrometer gemäß Anspruch 8, dadurch **gekennzeichnet,** daß die Strahlungsabschirmung (11, 12, 16, 17, 27) zwei kreisförmig zylindrische Rohre (11, 12) umfaßt, die koaxial ineinander angeordnet sind.

10. Ein Pyrometer gemäß irgendeinem der Ansprüche 6-9, dadurch **gekennzeichnet,** daß die Strahlungsabschirmung (11, 12, 16, 17, 27) aus wärmebeständigem rostfreiem Stahl, wie A.I.S.I (American Iron and Steel Institute)-310-Stahl oder 25/20 Ni/Cr-Stahl, der möglicherweise eine kleine Menge von Si enthält, Quarzglas oder einem hochtemperaturbeständigen Keramikmaterial, wie Aluminium- oder Berylliumoxid, hergestellt ist.

11. Ein Pyrometer gemäß irgendeinem der Ansprüche 6-10, dadurch **gekennzeichnet,** daß der thermische Sensor (23) ein Thermoelement oder ein Widerstandstemperaturmeßelement ist.

## Revendications

1. Un procédé de mesure de températures de l'ordre de 700 à 1200°C d'un gaz de combustion dans une chambre de combustion au moyen d'un pyromètre (10) ayant un capteur thermique (23) pour générer un signal électrique dépendant de la température du gaz et un écran de radiation (11, 12, 16, 17, 27) à travers lequel est généré un écoulement forcé du gaz de combustion, passant depuis une entrée de gaz (13, 14) qui est définie dans l'écran de radiation et qui est disposée à l'intérieur de la chambre de combustion au delà du capteur thermique (23) qui est disposé à l'intérieur de l'écran de radiation (11, 12, 16, 17, 27),
caractérisé en ce que le pyromètre (10) est disposé avec sa sortie de gaz (21) à l'intérieur de la chambre de combustion, en ce qu'un fluide de pression est amené à passer, d'une source de fluide de pression disposée à l'extérieur de la chambre de combustion, à travers un conduit de fluide de pression (19) jusqu'à une buse (20) ou ouverture d'évacuation de fluide de pression du conduit de fluide de pression disposée à l'intérieur de la chambre de combustion, de laquelle buse ou ouverture d'évacuation de fluide de pression le fluide de pression est évacué, et en ce qu'une basse pression est générée, à la sortie de gaz (21) par l'évacuation de fluide de pression depuis la buse (20) ou ouverture d'évacuation de gaz de pression pour générer l'écoulement forcé de gaz à travers l'intérieur de l'écran de radiation (11, 12, 16, 17, 27) depuis l'entrée de gaz (13, 14) au delà du capteur thermique (23) disposé à l'intérieur de l'écran de radiation (11, 12, 16, 17, 27) et jusqu'à la sortie de gaz (21).

2. Un procédé selon la revendication 1,
caractérisé en ce que ladite basse pression est générée à l'intérieur de l'écran de radiation (11, 12, 16, 17, 27) en évacuant du fluide de pression depuis la buse (20) ou ouverture d'évacuation de fluide de pression qui est disposée a l'intérieur de l'écran de radiation (11, 12, 16, 17, 27).

3. Un procédé selon la revendication 1 ou 2,
caractérisé en ce que le fluide de pression est de l'air sous pression, de l'eau sous pression ou de la vapeur sous pression.

4. Un procédé selon la revendication 2,
caractérisé en ce que le fluide de pression, qui est de préférence de l'air sous pression, est évacué depuis la buse ou ouverture d'évacuation de fluide de pression en quantité de 15 à 100 l/mn, de préférence 15 à 20 l/mn.

5. Un procédé selon l'une quelconque des revendications précédentes,
caractérisé en ce que, par la génération de ladite basse pression relative à la sortie de gaz (21), un écoulement de gaz ayant une vitesse d'écoulement de l'ordre de 30 à 50 m/s est généré.

6. Un pyromètre (10) destiné à être utilisé dans le procédé selon la revendication 1 et ayant un capteur thermique (23) pour générer un signal électrique dépendant de la température du gaz et un écran de radiation (11, 12, 16, 17, 27), dans lequel est définie une entrée de gaz (13, 14) et qui est adapté pour être disposé dans une chambre de combustion, le capteur thermique (23) étant disposé à l'intérieur de l'écran de radiation (11, 12, 16, 17, 27),
caractérisé en ce que le pyromètre (10) est adapté à être disposé avec sa sortie de gaz (21) à l'intérieur de la chambre de combustion, que le pyromètre (10) a un conduit de fluide de pression (19) qui est adapté à être alimenté en fluide de pression depuis une source extérieure de fluide de pression et qui se termine par une buse (20) ou une ouverture d'évacuation de fluide de pression pour évacuer le fluide de pression et pour générer un écoulement de gaz à travers l'intérieur de l'écran de radiation (11, 12, 16, 17, 27) depuis l'entrée de gaz (13, 14), au delà du capteur thermique (23) disposé à l'intérieur de l'ecran de radiation (11, 12, 16, 17, 27) et jusqu'à la sortie de gaz (21) en générant une basse pression relative à la sortie de gaz (21) par l'évacuation du fluide de pression.

7. Un pyromètre selon la revendication 6,
caractérisé en ce que la buse (20) ou ouverture d'évacuation de fluide de pression est disposée à l'intérieur de l'écran de radiation (11, 12, 16, 17, 27) et en aval par rapport au capteur thermique (23) en se référant à la direction de transport du gaz depuis l'entrée de gaz (13, 14) jusqu'à la sortie de gaz (21).

8. Un pyromètre selon la revendication 7,
caractérisé en ce que l'écran de radiation (11, 12, 16, 17, 27) comprend un tube cylindrique (12) en matériau résistant aux températures élevées, en ce que le tube cylindrique (12) est ouvert (21) à une extrémité, laquelle extrémité ouverte constitue la sortie de gaz (21), en ce que l'entrée de gaz (13 14) est constituée par une ou plusieurs ouvertures périphériques (14) dans le tube cylindrique (12), et en ce que le capteur thermique (23), et ladite buse (20), ou ouverture d'évacuation de gaz de pression sont disposés successivement entre ladite ou lesdites ouvertures périphériques (14) et ladite extrémité ouverte (21).

9. Un pyromètre selon la revendication 8,
caractérise en ce que l'écran de radiation (11, 12, 16, 17, 27) comprend deux tubes circulairement cylindriques (11, 12) disposés circulairement coaxialement l'un dans l'autre.

10. Un pyromètre selon l'une quelconque des revendications 6 à 9,
caractérisé en ce que l'écran de radiation (11, 12, 16, 17, 27) est fait en acier inoxydable résistant à la chaleur tel un acier A.I.S.I. (American Iron and Steel Institute) 310 ou un acier Ni/Cr 25/20 contenant éventuellement une petite quantité de Si, de verre quartzeux ou d'un matériau céramique résistant aux températures élevées, tel un oxyde d'aluminium ou de béryllium.

11. Un pyromètre selon l'une quelconque des revendications 6 à 10,
caractérisé en ce que le capteur thermique (23) est un thermocouple ou un élément résistant de mesure de température.
